(19)

**Europäisches Patentamt**
**European Patent Office**
**Office européen des brevets**

(11) **EP 4 469 287 B1**

(12) **EUROPEAN PATENT SPECIFICATION**

(45) Date of publication and mention
of the grant of the patent:
**08.07.2026  Bulletin 2026/28**

(21) Application number: **22822995.1**

(22) Date of filing: **29.11.2022**

(51) International Patent Classification (IPC):
***B60C 11/24*** *(2006.01)*

(52) Cooperative Patent Classification (CPC):
**B60C 11/246;** B60C 2019/004

(86) International application number:
**PCT/EP2022/083595**

(87) International publication number:
**WO 2023/143775 (03.08.2023 Gazette 2023/31)**

(54) **DEVICE AND METHOD FOR REAL-TIME TYRE WEAR MEASUREMENT**

VORRICHTUNG UND VERFAHREN ZUR ECHTZEIT-REIFENABNUTZUNGSMESSUNG

DISPOSITIF ET PROCÉDÉ DE MESURE DE L'USURE DE PNEUMATIQUE EN TEMPS RÉEL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Validation States:
**MA TN**

(30) Priority: **27.01.2022  EP 22382064**

(43) Date of publication of application:
**04.12.2024  Bulletin 2024/49**

(73) Proprietor: **Salcotech S.L.**
**36202 Vigo (ES)**

(72) Inventors:
• **SALINAS COSTA, Agustin Alberto**
**36390 VIGO (ES)**

• **BARREIROS PRADA, Francisco**
**32001 OURENSE (ES)**
• **BLANCO CARBALLO, Raquel**
**36206 VIGO (ES)**
• **BARROS VILLAR, Carlos**
**32356 OURENSE (ES)**
• **FERNÁNDEZ SUÑER, Octavio**
**28002 MADRID (ES)**

(74) Representative: **Clarke, Modet y Cía., S.L.**
**C/ Suero de Quiñones 34-36**
**28002 Madrid (ES)**

(56) References cited:
**EP-A1- 3 572 245    DE-A1- 102015 117 024**
**US-B2- 7 775 094**

**Description**

**OBJECT OF THE INVENTION**

The present invention belongs to the field of tyre condition monitoring in the automotive industry.

A first object of the present invention is a device designed for measuring tyre wear in real time.

A second object of the present invention is a method the previous device can carry out for measuring tyre wear in real time.

**PRIOR ART**

Current automobiles have more and more sensors intended to measure relevant parameters for a correct operation. The information provided by these sensors is shown to the driver by means of a control interface provided inside the cabin, for example by means of light indicators or sound alarms. The driver can thus take the necessary measures depending on the data provided by the sensors. Alternatively, the information of the sensors may be sent to a remote location, for example a control centre controlling a fleet of vehicles, thereby enabling a better management of maintenance tasks.

In this context, TPMS (Tyre Pressure Monitoring System) are widely known from years ago. The main elements making up a TPMS are a pressure sensor and a temperature sensor connected by means of a processing means having communication capabilities. The communication means may in principle by of any kind as long as it provides for the transmission of the information obtained by the sensors in a secure and reliable manner. For example, radiofrequency or, in recent years, IoT technology are commonly employed for this purpose. These elements are embedded in an electronic board for making up a single small-size part that is installed inside the tyre or at the air valve of the tyres of the vehicle. Thanks to this configuration, the sensors obtain in real time tyre pressure and temperature, and this information is sent outside for analysis. For example, the information about pressure and temperature can be sent to a control means of the vehicle, which then sends the data to the driver through the control board of the vehicle (for example, an indicator may be lit when the pressure or temperature are anomalous). Alternatively, the pressure and temperature information may be sent to a remote location, for example to the cloud, for analysis in a control centre located remotely.

TPMS systems are very useful, since they provide pressure and temperature of each of the tyres in real time. The driver or vehicle manager can thereby take the necessary decisions for maintaining the tyres in good condition. However, a drawback of TPMS systems is that they do not measure perhaps the most important tyre parameter: tread depth.

Indeed, it is well known that many traffic accidents are nowadays caused by circulating using worn tyres not replaced in due time. When a tyre wears out, the tread is lost, grip is reduced, and accident probability significatively increases, particularly under bad weather conditions. However, monitoring the condition of the tyres in a vehicle nowadays depends on a person, usually the driver, periodically inspecting the tyres visually. Most vehicles circulating with worn out tyres are due to oversight or carelessness of the driver. Furthermore, in the particular case of heavy vehicles having two tyres at each side, it is almost impossible to correctly inspecting the inner-side back axis tyres.

Some devices for determining the tread depth of a vehicle tyre are known. However, these devices carry out indirect measurements, base their information on mathematical algorithms, or else they are external to the vehicle itself. For example, systems having an optical laser provided on the ground for determining tread depth as the vehicle passes over them are known.

In conclusion, there still exists in this field a need for a device integrated in the vehicle and capable of directly and automatically providing information about the condition of tyre tread.

Document US7775094B2 discloses an apparatus and method for measuring tire thickness.

The following documents EP 3 572 245 A1 and DE 10 2015 117024 A1 can also be cited as prior art.

**DESCRIPTION OF THE INVENTION**

The present invention solves the aforementioned drawbacks thanks to a device and a method particularly designed for real-time measuring of tyre wear. An ultrasound emission/reception system configured to be attached to the inner face of the tyre is provided therefor. Furthermore, in a similar manner as the tyre pressure and temperature information provided by conventional TPMS, the device of the invention may send the wear information to a control means of the vehicle or to a remote location for a suitable management of tyre wear. In fact, when the device of the invention further comprises pressure and temperature sensors, it is *de facto* an improved TPMS with respect to conventional TPMS.

It is important to note that the device of the present invention is autonomous and automatic. That is, it is autonomous in the sense that it is programmable, such that the tyre wear measurements take place without the need for any specific command, and it is automatic in the sense that the tyre or the sensor do not need to be manipulated for the device to carry out the measurement.

Next, the device of the invention, a tyre including the device of the invention, and a method for measuring tyre wear by means of the device of the invention, are disclosed in further detail

**Tyre wear measurement device**

A first aspect of the present invention is directed to a device for real-time measuring tyre wear. As mentioned above, the tyre comprises an inner face and an outer face and, in turn, the outer face comprises a tread formed by a number of grooves recessed with respect to a rolling surface of the tyre. Now, the device of the invention is advantageous in that it comprises an ultrasound emitter and an ultrasound receiver, and it is configured for attaching to the inner face of the tyre in a position where an emission end of the ultrasound emitter and a receiving end of the ultrasound receiver face a portion of the rolling surface where there is no recess. Thus, by emitting by means of the emitter an ultrasound wave through a material making up the tyre and receiving by means of the receiver said wave after bouncing on the rolling surface, a distance between the inner face and the rolling surface of the outer face is obtained. While this distance does not directly amount to the tread depth, it can be obtained in a direct and simple manner just by subtracting the obtained distance from the distance between the bottom of a groove and the inner face of the tyre.

This configuration is advantageous because it allows for obtaining tyre wear in an automatic manner, and thereby the driver or the person responsible for the vehicle condition can be warned when the tread is excessively worn.

Devices for measuring rubber thickness based on ultrasound emission at frequencies of several megahertz, for example between 2 MHz and 3 MHz, are known. However, the inventors of the present application experimentally found that these frequencies are not suitable for measuring tyre thickness due to the fact that tyres have a reinforcement metal mesh that prevent the ultrasound waves from passing through. Indeed, at the aforementioned frequencies, ultrasound waves cannot pass through the metal mesh, bouncing against it instead. To solve this problem, the inventors of the present application found that the ultrasound frequency needs to be much lower, between 200 KHz and 300 KHz. Therefore, the ultrasound emitter and receiver are respectively configured for emitting and receiving ultrasound waves at frequencies of between 200 KHz and 300 KHz.

As mentioned above, this configuration is advantageous because it allows the device of the invention to be employed in tyres having a reinforcement metal mesh.

The emitter and receiver may have a number of different configurations although, according to a particularly preferred embodiment of the invention, the emission end of the ultrasound emitter and the receiving end of the ultrasound receiver are positioned at an attachment face of the device to the tyre. The attachment face of the device is that through which the device of the invention is attached to the tyre, and its shape may be adapted to the inner curvature of the tyre. Furthermore, the attachment face may comprise attachment means such as chemical adhesives or the like. Thereby, when the device of the invention is attached to the inner face of the tyre, the emission and reception ends respectively of the emitter and the receiver are in direct contact with said inner face of the tyre, such that the ultrasound wave emitted by the emitter enters directly into the tyre material.

This configuration is advantageous in that the measurement results are more precise, since the need of the ultrasound wave to pass through an air-tyre material interface is prevented.

On the other hand, the emitter and the receiver may be positioned anywhere in the device provided that the signal sent by the emitter can be correctly received by the receiver. However, according to a particularly preferred embodiment of the invention, the ultrasound emitter and the ultrasound receiver are adjacent one to the other.

This configuration is advantageous in that the precision of the measurement is enhanced and it further allows for obtaining a particularly compact device.

Preferably, the device of the invention further comprises a pressure sensor and a temperature sensor. These sensors may be of any type and be positioned anywhere in the device provided they obtain temperature and pressure inside the tyre. For example, similar pressure and temperature sensors as those used in conventional TPMS can be employed.

This configuration is advantageous in that complete information in connection to the condition of the tyres is obtained, including pressure, temperature and level of wear. This information alone is enough for determining a moment when maintenance or replacement of the tyres is needed.

According to still another preferred embodiment, the device of the invention further comprises a communication means. The communication means can be of any type provided that the information about tyre wear and, if necessary, the temperature and pressure inside the tyre, can be transmitted to a control means of the vehicle or to a remote location. Just as an example, the communication means can be based on IoT technology, including Bluetooth, Wifi, Zigbee, NFC, UMTS, GPRS, GSM, 3G, 4G, 5G communication technologies, or any other suitable technology for establishing the communication mentioned above.

**Tyre having the above disclosed device**

The present invention is also directed to a tyre having the device disclosed in the above paragraphs, where said device is attached by means of its attachment face to the inner face of the tyre in a position facing a portion of the rolling surface where there is no groove. A tyre of this type would be ready to be installed in the vehicle and used as an intelligent tyre.

**Method for measuring tyre wear**

The invention further discloses a method for real-time measuring tyre wear using a device as disclosed in the previous paragraphs. Obviously, before carrying out the method, the device needs to be attached to the inner face of the tyre in a position facing a portion of the rolling surface where there is no groove. The method comprises the following steps:

1. Emitting, by means of the ultrasound emitter, an ultrasound wave through the tyre material. The emission direction is essentially perpendicular to the inner face of the tyre, such that the distance travelled by the wave through the tyre material is minimized and, at the same time, the necessary calculations are made simpler.

2. Receiving, by means of the ultrasound receiver, said ultrasound wave after bouncing on the rolling surface.

3. Determining, based on the time of flight of the ultrasound wave and on a transmission speed of the ultrasound wave through the tyre material, a distance between the inner face and the rolling surface of the outer face. The determination of said distance is carried out by means of calculations generally known in this field.

According to the above, the result of this method is not directly the most employed parameter for determining tyre wear in a vehicle, namely tread depth. However, tread depth can be obtained in several manners from the information provided by the present device. For example, the current tread depth can be obtained simply by subtracting the wear (obtained, for example, subtracting an initial depth of the tyre from the actual depth in a particular moment) from the initial tread depth. Alternatively, it would be possible to use two devices of the type disclosed above, one of them positioned at a location on the inner face facing a portion of the rolling surface where there is no groove, and the other one positioned at a location on the inner face facing the bottom of a groove. The tread depth is directly the difference between the distance obtained by both devices.

In any case, the device of the invention can carry out this method periodically for determining the tyre condition in real time. Furthermore, obtaining this information in real time allows for analysing the wear speed of the tyres depending on other factors connected to the driving style or the weather for obtaining patterns allowing for the driver to extend the useful life of the vehicles.

The ultrasound wave has a frequency of between 200 KHz and 300 KHz. As mentioned before, this frequency range ensures that the wave passes through a metal mesh such as that included as a reinforcement in many tyres.

Lastly, according to still another preferred embodiment, the ultrasound wave is emitted essentially in perpendicular to the inner face of the tyre. This configuration minimises the distance travelled by the wave and allows for obtaining more accurate results.

**Procedure for the initial calibration of the device**

Since the structure and the materials used for making the tyres are variable, the sound propagates at a different speed for each tyre model. Thus, it becomes necessary to measure the sound propagation speed in the tyre where the device is going to be installed. Further, for the device of the invention to determine the depth of the tread at any given time, knowing the initial depth of the grooves making up said tread is necessary, the wear obtained by the device of the invention being subtracted therefrom to obtain as a final result the depth of the grooves in real time.

In view of all that, the method for the initial calibration of the device comprising measuring these two variables: the sound propagation speed and the initial depth of the tread. Thereafter, the method comprises transmitting both to the tyre wear measurement system, which thereby is calibrated for the particular tyre model it is installed into.

There are a number of ways to obtain these two variables although, according to a particular embodiment of the invention, the sound propagation speed is measured preferably by connecting a sound speed sensor between the outer face of the tyre and the inner face of the tyre. On the other hand, the initial tread depth is preferably measured using a calliper for measuring the depth of the grooves making up the tread of the tyre.

These steps are carried out for each tyre model, thereby generating a database for adjusting the device of the invention in a precise manner for the tyre model it is going to be installed into. This database could be associated to an app where the installer could easily and fast obtain the data for each tyre model.

**BRIEF DESCRIPTION OF THE DRAWINGS**

Fig. 1 shows a schematic diagram of the main components of an exemplary device according to the invention.

Fig. 2 shows an exemplary device according to the present invention attached to the inner face of a tyre.

Fit. 3 shows another exemplary device according to the present invention fixed to the inner face of a tyre.

**PREFERRED EMBODIMENT OF THE INVENTION**

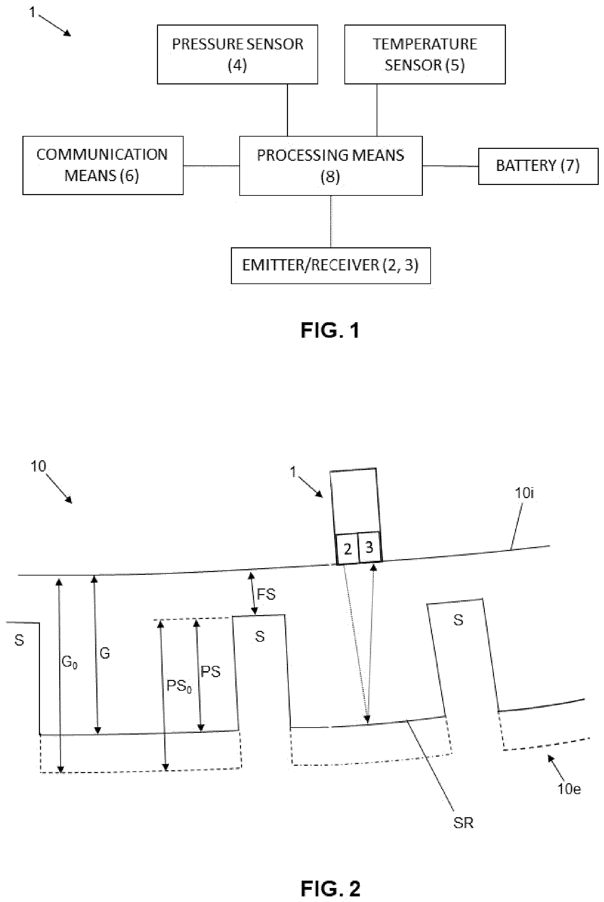

Fig. 1 shows a schematic diagram of a device (1) according to the present invention. As shown, the device (1) comprises a processing means (8) connected to an ultrasound emitter/receiver (2, 3), a pressure sensor (4), a temperature sensor (5), a communication means (6), and a battery (7).

The processing means (8) can be of any kind provided it can suitably control the rest of elements in the manner disclosed in this document. For example, the processing means can be a microcontroller, a microprocessor, a SoC (System on Chip), an ASIC (Application Specific Integrated Circuit), a DSP (Digital Signal Processor), an FPGA (Field Programmable Gate Array), or any other similar component having a suitable number of in/out ports and enough computation capacity.

The emiter/receiver (2, 3) in this example is shown as a single element, since in the distance measurement field components integrating both elements for measuring distances using the method disclosed in this document are known. However, the emitter/receiver (2, 3) could be implemented in different ways, in particular by means of two separate elements suitably positioned. In particular, the emission end of the emitter (2) and the reception end of the receiver (3) are positioned flush at a face of the device (1) configured to be attached to the inner surface (10i) of the tyre (10), as shown in Fig. 2.

The pressure sensor (4) and the temperature sensor (5) may be similar to those conventionally employed in known TPMS's. Their function is to provide a measurement of the pressure and temperature inside the tyre.

The communication means (6) can be of any type provided it allows for the communication between the device (1), which in use is attached inside the tyre (10), and the vehicle control means or a remote location such as a control centre for a fleet of vehicles. The communication means (6) is, therefore, based on a technology suitable for each application, including, for exam-ple, IoT technology, Bluetooth, Wifi, Zigbee, NFC, UMTS, GPRS, GSM, 3G, 4G, 5G, and others. Note that, depending on the type of processing means (8) employed, the communication means (6) may be integrated in the processing means (8) itself. In this context, it is irrelevant if both elements are integrated in a single component or if they make up separate components.

The battery (7) can be of any type provided it can provide the device (1) with enough energy throughout all its useful life.

Fig. 2 shows the device (1) of the invention fixed to the inner face (10i) of a tyre (10). As shown, the device (1) of the invention has an attachment face where the emission and reception ends respectively of the emitter (2) and the receiver (3) are positioned. That is, both ends are flush on an essentially flat face configured for attachment to the inner face (10i) of the tyre (10), for example by means of adhesive or the like. Naturally, to prevent the ultrasound wave to be affected by the adhesive, the attachment face has an emission/reception portion where the emitter (2) and receiver (3) emission and reception ends are positioned, and an attachment portion (not shown in the figure) separate from the above disclosed portion where the adhesive for attaching the device (1) to the tyre (10) is provided.

The emitter (2) sends an ultrasound wave essentially in perpendicular to the inner face (10i) of the tyre (10), and this wave passes through the material making up the tyre (10), bounces against the interface with air made up by the rolling surface (SR) and returns again to the receiver (3) positioned next to the emitter (2). The device (1) determines the time of flight of the ultrasound wave and, knowing the transmission speed of the ultrasound wave within the material making up the tyre, it is possible in a known manner to easily determine the distance travelled. The current thickness (G) of the tyre (10), that is, the distance between the inner face (10i) and the rolling surface (SR) of the outer face (10e), is half the distance travelled by the ultrasound wave.

Once the current thickness (G) is known, there are different ways to obtain the depth (PS) of the grooves (S) making up the tread on the outer face (10e) of the tyre (10). For example, if the initial thickness ($G_0$) of the tyre (10) is known, it is possible to determine any time the wear of the tyre (10) by subtracting ($G_0$) - (G). The initial thickness ($G_0$) can be obtained, for example, by carrying out a first measurement of the tyre (10) thickness before it is used for the first time, or just at the moment when it is first used. Thereby, the groove depth (PS) at any given moment is the initial depth of the groove ($PS_0$), known for each tyre model, minus the wear calculated by the device (1) of the invention. That is:

$$PS = PS_0 - [(G_0) - (G)]$$

Alternatively, it is also possible to use two devices (1) like the one disclosed in the present document. A first device (1) would be installed at the position shown in Fig. 2, and it would allow for obtaining the current thickness (G) at any given moment. A second device (1) would be installed in a position on the inner face (10i) facing a groove (S). Therefore, the ultrasound wave sent would bounce on the bottom of the groove (S), thereby providing the distance between the inner face (10i) and the bottom of the groove (S) (this distance is referred to herein as FS). According to this configuration, the current groove depth (PS) at any given moment would be obtained by subtracting the total thickness (G) from said distance (FS):

$$PS = G - FS$$

In any case, it is easy to see that the device (1) of the invention provides information from which the tyre wear can be obtained by simple calculations.

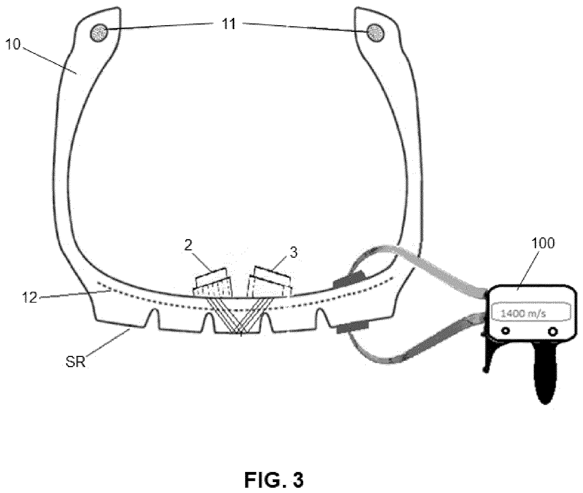

Fig. 3 shows another schematic representation of an exemplary device (1) according to the invention. In this figure, the pressure and temperature sensors are not represented. However, it is understood that the device of Fig. 3 is integrated into a TPMS having three different sensors: thickness, temperature and pressure. These sensors will be encapsulated within the same cover, but they will use separate control systems.

For using the device, knowing the sound propagation speed and the initial depth of the grooves for this particular tyre model is necessary. The installer starts by searching for this tyre model in a listing he/she can access to through an app. In case the data corresponding to that particular tyre model were available, he/she introduces them into the device of the invention, which thereby is ready for use. Otherwise, the installer must measure both variables. To measure the sound propagation speed, a sound speed sensor (100) connected between the outer face and the inner face of the tyre is used, while for measuring the initial depth of the grooves making up the tread of the tyre a calliper is used. Once the data are obtained, the installer introduces them into the device of the invention and, also, he/she stores them in the app listing, such that they are available in the future.

The TPMS thus configured continuously monitors the pressure, temperature and depth of the tread of the tyre throughout is whole life. Thereto, the pressure and temperature sensors measure pressure and temperature once every hour and send them to the control means of the vehicle. As to the measurement of the tyre wear, this measurement should be carried out with the tyre cold, that is, once the vehicle has been parked for a predetermined time interval. Therefore, in parallel to the pressure and temperature measurements, the TPMS also has a¡n acceleration sensor providing the acceleration of the vehicle. If it detects that the vehicle is parked, the TPMS will wait for 10 minutes and it will again measure the acceleration. After yet another 10 minutes, the same measurement is carried out for a third time. If, after making this measurement three straight times the vehicle is still parked, and additionally 24 hours have passed since the last measurement, the TPMS will send the tyre wear measurement device a command for taking a measurement and for sending the result of said measurement to the control means of the vehicle.

**Claims**

1. Device (1) for real-time tyre wear measurement, for a tyre (10) comprising an inner face (10i) and an outer face (10e), the outer face (10e) comprising a tread formed by a plurality of grooves (S) recessed with respect to a rolling surface (SR),

   comprising an ultrasound emitter (2) and an ultrasound receiver (3),
   the device (1) being configured for attaching to the inner face (10i) of the tyre (10), such that, by means of the emission by the emitter (2) of an ultrasound wave through a material of the tyre (10) and the reception by the receiver (3) of said wave after bouncing on the rolling surface (SR), a distance is obtained,
   **characterized in that** the ultrasound emitter (2) and receiver (3) are respectively configured for emitting and receiving ultrasound at frequencies of between 200 KHz and 300 KHz.

2. Device (1) according to claim 1, where the emission end of the ultrasound emitter (2) and the reception end of the ultrasound receiver (3) are positioned at an attachment face of the device to the tyre (10).

3. Device (1) according to any of the previous claims, where the ultrasound emitter (2) and the ultrasound receiver (3) are adjacent one to the other.

4. Device (1) according to any of the previous claims, further comprising a pressure sensor (4) and a temperature sensor (5).

5. Device (1) according to any of the previous claims, further comprising a communication means (6).

6. Tyre system (10) **characterized by** comprising a device (1) according to any of claims 1-5, where said device (1) is attached through its attachment face to the inner face (10i) of the tyre (10) at a position where an emission end of the ultrasound emitter (2) and a reception end of the ultrasound receiver (3) are facing a portion of the rolling surface (SR) where there is no groove (S) such that, by means of the emission by the emitter (2) of an ultrasound wave through a material of the tyre (10) and the reception by the receiver (3) of said wave after bouncing on the rolling surface (SR) of the tyre (10), a distance between the inner face (10i) and the rolling surface (SR) of the outer face (10e) is obtained.

7. Method for real-time tyre wear measurement by means of a device (1) according to any of claims 1-5, where the device (1) is attached to the inner face (10i) of the tyre (10) at a position facing a portion of the rolling surface (SR) where there is no groove (S), comprising the following steps:

   - emitting, by means of the ultrasound emitter (2), an ultrasound wave through a material of the tyre (10);
   - receiving, by means of the ultrasound receiver (3), said ultrasound wave after bouncing on the rolling surface (SR); and
   - determining, from the time of flight of the ultrasound wave and a transmission speed of the ultrasound wave through the material of the tyre (10), a distance between the inner face (10i) and the rolling surface (SR) of the outer face (10e)

   **characterized in that** the ultrasound wave has a frequency of between 200 KHz and 300 KHz.

8. Method according to claim 7, where the ultrasound wave is emitted essentially in perpendicular to the inner face (10i) of the tyre (10).

## Patentansprüche

1. Vorrichtung (1)für die Echtzeit-Reifenverschleißmessung für einen Reifen (10), umfassend eine Innenfläche (10i) und eine Außenfläche (10e), wobei die Außenfläche (10e) eine Lauffläche aufweist, die durch eine Vielzahl von Rillen (S) gebildet wird, die in Bezug auf eine Rolloberfläche (SR) ausgespart sind,

   umfassend einen Ultraschallsender (2) und einen Ultraschallempfänger (3), wobei die Vorrichtung (1) dazu konfiguriert ist, an der Innenfläche (10i) des Reifens (10) angebracht zu werden, sodass durch die Aussendung einer Ultraschallwelle durch den Sender (2) durch ein Material des Reifens (10) hindurch und den Empfang der Welle durch den Empfänger (3) nach deren Rückprall an der Rolloberfläche (SR) eine Entfernung erhalten wird, **dadurch gekennzeichnet, dass** der Ultraschallsender (2) und der Empfänger (3) jeweils dazu konfiguriert sind, Ultraschall bei Frequenzen zwischen 200 kHz und 300 kHz zu senden und zu empfangen.

2. Vorrichtung (1) nach Anspruch 1, wobei das Sendeende des Ultraschallsenders (2) und das Empfangsende des Ultraschallempfängers (3) an einer Anbringungsfläche der Vorrichtung am Reifen (10) positioniert sind.

3. Vorrichtung (1) nach einem der vorhergehenden Ansprüche, wobei der Ultraschallsender (2) und der Ultraschallempfänger (3) benachbart sind.

4. Vorrichtung (1) nach einem der vorhergehenden Ansprüche, ferner umfassend einen Drucksensor (4) und einen Temperatursensor (5).

5. Vorrichtung (1) nach einem der vorhergehenden Ansprüche, ferner umfassend ein Kommunikationsmittel (6).

6. Reifensystem (10), **dadurch gekennzeichnet, dass** es eine Vorrichtung (1) nach einem der Ansprüche 1 bis 5 umfasst, wobei die Vorrichtung (1) über ihre Anbringungsfläche an der Innenfläche (10i) des Reifens (10) an einer Position angebracht ist, an der ein Sendende des Ultraschallsenders (2) und ein Empfangsende des Ultraschallempfängers (3) einem Abschnitt der Rolloberfläche (SR) zugewandt sind, an dem keine Rille (S) vorhanden ist, so dass durch die Aussendung einer Ultraschallwelle durch den Sender (2) durch ein Material des Reifens (10) hindurch und den Empfang der Welle durch den Empfänger (3) nach deren Rückprall an der Rolloberfläche (SR) des Reifens (10) eine Entfernung zwischen der Innenfläche (10i) und der Rolloberfläche (SR) der Außenfläche (10e) erhalten wird.

7. Verfahren für die Echtzeit-Reifenverschleißmessung mittels einer Vorrichtung (1) nach einem der Ansprüche 1 bis 5, wobei die Vorrichtung (1) an der Innenfläche (10i) des Reifens (10) an einer Position angebracht ist, die einem Abschnitt der Rolloberfläche (SR) zugewandt ist, an dem sich keine Rille (S) befindet, umfassend die folgenden Schritte:

   - Aussenden einer Ultraschallwelle durch das Material des Reifens (10) mittels des Ultraschallsenders (2);
   - Empfangen der Ultraschallwelle nach dem Rückprall an der Rolloberfläche (SR) mittels des Ultraschallempfängers (3); und
   - Bestimmen, ausgehend von der Laufzeit der Ultraschallwelle und einer Ausbreitungsgeschwindigkeit der Ultraschallwelle durch das Material des Reifens (10), einer Entfernung zwischen der Innenfläche (10i) und der Rolloberfläche (SR) der Außenfläche (10e)

   **dadurch gekennzeichnet, dass** die Ultraschallwelle eine Frequenz zwischen 200 kHz und 300 kHz aufweist.

8. Verfahren nach Anspruch 7, wobei die Ultraschallwelle im Wesentlichen senkrecht zur Innenfläche (10i) des Reifens (10) ausgesendet wird.

## Revendications

1. Dispositif (1) de mesure en temps réel de l'usure d'un pneumatique, pour un pneumatique (10) comprenant une face intérieure (10i) et une face extérieure (10e), la face extérieure (10e) comprenant une bande de roulement formée par une pluralité de rainures (S) en retrait par rapport à une surface de roulement (SR),

   comprenant un émetteur d'ultrasons (2) et un récepteur d'ultrasons (3), le dispositif (1) étant configuré pour être fixé à la face intérieure (10i) du pneumatique (10), de telle sorte que, au moyen de l'émission par l'émetteur (2) d'une onde ultrasonore à travers un matériau du pneumatique (10) et de la réception par le récepteur (3) de ladite onde après réflexion sur la surface de roulement (SR), une distance soit obtenue, **caractérisé en ce que** l'émetteur d'ultrasons (2) et le récepteur (3) sont respectivement configurés pour émettre et recevoir des ultrasons à des fréquences comprises entre 200 KHz et 300 KHz.

2.  Dispositif (1) selon la revendication 1, dans lequel l'extrémité d'émission de l'émetteur d'ultrasons (2) et l'extrémité de réception du récepteur d'ultrasons (3) sont positionnées au niveau d'une face de fixation du dispositif au pneumatique (10).

3.  Dispositif (1) selon l'une quelconque des revendications précédentes, dans lequel l'émetteur d'ultrasons (2) et le récepteur d'ultrasons (3) sont adjacents l'un à l'autre.

4.  Dispositif (1) selon l'une quelconque des revendications précédentes, comprenant en outre un capteur de pression (4) et un capteur de température (5).

5.  Dispositif (1) selon l'une quelconque des revendications précédentes, comprenant en outre un moyen de communication (6).

6.  Système de pneumatique (10) **caractérisé en ce qu'**il comprend un dispositif (1) selon l'une quelconque des revendications 1 à 5, ledit dispositif (1) étant fixé par sa face de fixation à la face intérieure (10i) du pneumatique (10) à une position où une extrémité d'émission de l'émetteur d'ultrasons (2) et une extrémité de réception du récepteur d'ultrasons (3) font face à une portion de la surface de roulement (SR) où il n'y a pas de rainure (S), de telle sorte que, au moyen de l'émission par l'émetteur (2) d'une onde ultrasonore à travers un matériau du pneumatique (10) et de la réception par le récepteur (3) de ladite onde après réflexion sur la surface de roulement (SR) du pneumatique (10), une distance entre la face intérieure (10i) et la surface de roulement (SR) de la face extérieure (10e) soit obtenue.

7.  Procédé de mesure en temps réel de l'usure d'un pneumatique au moyen d'un dispositif (1) selon l'une quelconque des revendications 1 à 5, dans lequel le dispositif (1) est fixé à la face intérieure (10i) du pneumatique (10) à une position faisant face à une portion de la surface de roulement (SR) où il n'y a pas de rainure (S), comprenant les étapes suivantes :

    - émettre, au moyen de l'émetteur d'ultrasons (2), une onde ultrasonore à travers un matériau du pneumatique (10) ;
    - recevoir, au moyen du récepteur d'ultrasons (3), ladite onde ultrasonore après réflexion sur la surface de roulement (SR) ; et
    - déterminer, à partir du temps de parcours de l'onde ultrasonore et d'une vitesse de transmission de l'onde ultrasonore à travers le matériau du pneumatique (10), une distance entre la face intérieure (10i) et la surface de roulement (SR) de la face extérieure (10e)

**caractérisé en ce que** l'onde ultrasonore a une fréquence comprise entre 200 KHz et 300 KHz.

8.  Procédé selon la revendication 7, dans lequel l'onde ultrasonore est émise essentiellement perpendiculairement à la face intérieure (10i) du pneumatique (10).

**FIG. 1**

**FIG. 2**

**FIG. 3**

**EP 4 469 287 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7775094 B2
- EP 3572245 A1
- DE 102015117024 A1